# EUROPEAN PATENT APPLICATION

(11) **EP 4 628 743 A1**
(43) Date of publication of application: **08.10.2025**
(21) Application number: 25167729.0
(22) Date of filing: 01.04.2025
(51) Int. Cl.: F16D 11/10, F16D 23/12

(54) **DEVICE FOR SELECTIVELY RESTRICTING AND FOR PREVENTING ROTATION OF A ROTATABLE SHAFT**

(30) Priority: 01.04.2024 US 202463572534 P
(71) Applicant: MacDonald, Dettwiler and Associates Inc., Brampton, Ontario L6Y 6K7 (CA)
(72) Inventor: Fursov, Vladimir, L6Y 6K7 Brampton, Ontario (CA); Bassalious, Mina, L6Y 6K7 Brampton, Ontario (CA); Drmic, Zeljko, L6Y 6K7 Brampton, Ontario (CA)
(74) Representative: Grünecker Patent- und Rechtsanwälte PartG mbB

(57) **Abstract**

A device and method for selectively restricting and for preventing rotation of a shaft are provided. The device includes a plunger disposed along an axis of rotation having first and second ends, a biasing element disposed along the axis abutting the second end, subjected to a pre-load, and a cross-pin slot, a stationary locking plate including first radially disposed locking teeth disposed at a first draft angle, a rotary locking plate including second radially disposed locking teeth disposed at a second draft angle, the radially disposed locking teeth configured to prevent rotation of the rotary locking plate when mutually engaged, a cross-pin disposed in the cross-pin slot and through the plunger perpendicular to the axis and received in the cross-pin hole. When sufficient force is applied to the first end, the second end compresses the biasing element, thereby permitting rotation. When torque applied is below breakaway torque, rotation is prevented.

## Description

### Technical Field

The following relates generally to mechanical interfacing, and more particularly to a secondary or primary locking feature to rotatable shafts.

### Introduction

In robotic grappling, a first robotic part grapples or interfaces with a second robotic part. The goal of robotic grappling may be to restrain or prevent movement of the second robotic part with respect to the first robotic part. Such movement may include translational (linear) or rotational movement relative to the first robotic part.

Where the first robotic part is moving before the grappling (e.g., in orbit, in deep space), the resulting complex of the first robotic part having grappled or interfaced the second robotic part may continue moving and may be subject to various forces that could separate the second robotic part from the first robotic part despite the successful grappling or interfacing. Accordingly, it is desirable to provide locking features that fully restrain or prevent movement after grappling.

In particular, in order to avoid or mitigate cases of mechanical failure, it may be desirable to provide locking features that may function in addition to and/or instead of conventional locking features used in robotic grappling or interfacing.

Some solutions to the foregoing problem have included split beam clamping fingers or polymeric inserts to achieve locking features. However, these solutions have a limited lifespan.

Accordingly, there is a need for an improved device for selectively restricting and for preventing rotation of a rotatable shaft and further configured to act as a secondary or primary locking feature in a robotic grapple application with long-life capabilities, and a method for achieving same.

### Summary

A device for selectively restricting and for preventing rotation of a rotatable shaft is provided. The device includes a rotatable shaft for receiving a torque input, including a stationary locking plate interfacing shaft section and a rotary locking plate interfacing shaft section, a plunger disposed within and along an axis of rotation of the rotatable shaft, the plunger having a first end and a second end longitudinally opposed along the axis of rotation, a biasing element disposed within and along the axis of rotation, abutting the second end of the plunger, the biasing element having an uncompressed state and a compressed state, the biasing element subjected to a pre-load, and a cross-pin slot disposed in the rotary locking plate interfacing shaft section of the rotatable shaft, the cross-pin slot having a fore position and an aft position, the fore position being closer to the first end of the plunger than the aft position, a locking plate assembly including a stationary locking plate including a groove perpendicular to the axis of rotation for receiving the stationary locking plate interfacing shaft section to allow rotation of the rotatable shaft relative to the stationary locking plate, a first set of radially disposed locking teeth on a rotary locking plate interfacing side of the stationary locking plate, the first set of radially disposed locking teeth disposed at a first draft angle, a rotary locking plate including an aperture therethrough that is perpendicular to the axis of rotation and configured to receive and engage with the rotary locking plate interfacing shaft section such that the rotary locking plate rotates with the rotatable shaft when the rotatable shaft is in the aperture, a cross-pin hole, a second set of radially disposed locking teeth on a stationary locking plate interfacing side of the rotary locking plate, the second set of radially disposed locking teeth disposed at a second draft angle substantially identical to the first draft angle, the first and second sets of radially disposed locking teeth i) being configured to selectively restrict rotation of the rotary locking plate when mutually engaged when a force applied to the first end of the plunger is below a sufficient force and ii) being configured to prevent rotation of the rotary locking plate when mutually engaged when a torque applied to the rotatable shaft is below a breakaway torque, a cross-pin disposed in the cross-pin slot and through the plunger perpendicular to the axis of rotation such that the cross-pin is received in the cross-pin hole of the rotary locking plate. When the biasing element is uncompressed, the biasing element maintains the cross-pin in the fore position of the cross-pin slot, thereby causing the first and second sets of locking teeth to mutually engage, thereby selectively restricting rotation of the rotatable shaft. When the sufficient force is applied to the first end of the plunger, the second end of the plunger compresses the biasing element, moving the cross-pin into the aft position of the cross-pin slot causing the rotary locking plate to translate axially along the axis of rotation away from the stationary locking plate, thereby causing the first and second sets of locking teeth to mutually disengage, thereby selectively permitting rotation of the rotatable shaft. The pre-load defines the sufficient force. The first draft angle and the pre-load together define the breakaway torque.

The biasing element in the uncompressed state may bias the rotary locking plate into contact with the stationary locking plate.

The biasing element may be a spring.

The pre-load may be varied or fine-tuned before or during use by disposing one or more shims on the spring or varying the position of the one or more shims on the spring.

The cross-pin moving from the fore position to the aft position may move the rotary locking plate out of contact with the stationary locking plate.

The cross-pin slot may be perpendicular to the axis of rotation and may traverse through the center of the rotary locking plate interfacing shaft section of the rotatable shaft.

The rotary locking plate interfacing shaft section may have a hexagonal profile and the aperture of the rotary locking plate may have a complementary hexagonal profile.

The stationary locking plate interfacing shaft section may be disc-shaped.

The first draft angle may be 85 degrees and the second draft angle may be 95 degrees.

The first draft angle may be 80 degrees and the second draft angle may be 100 degrees.

The cross-pin may be a cylindrical tab, the cross-pin hole may be a cylindrical hole, and the cross-pin slot may be a cylindrical slot.

A method for selectively restricting and for preventing rotation of a rotatable shaft is provided. The method includes providing the rotatable shaft including a stationary locking plate interfacing shaft section, a rotary locking plate interfacing shaft section, a cross-pin slot including a fore position and an aft position, a plunger disposed within and along an axis of rotation of the rotatable shaft, the plunger having a first end and a second end longitudinally opposed along the axis of rotation, and a biasing element having an uncompressed state and a compressed state, the biasing element subject to a pre-load, providing a stationary locking plate for receiving the stationary locking plate interfacing shaft section, the stationary locking plate including a first set of radially disposed locking teeth facing a rotary locking plate, the first set of radially disposed locking teeth disposed at a first draft angle, providing the rotary locking plate for receiving the rotary locking plate interfacing shaft section, the rotary locking plate including a second set of radially disposed locking teeth facing the stationary locking plate, the second set of radially disposed locking teeth disposed at a second draft angle substantially identical to the first draft angle, the rotary locking plate further for receiving a cross-pin, configuring the first and second sets of radially disposed locking teeth to i) selectively restrict rotation of the rotary locking plate when mutually engaged when a force applied to the first end of the plunger is below a sufficient force and ii) prevent rotation of the rotary locking plate when mutually engaged when a torque applied to the rotatable shaft is below a breakaway torque, disposing the cross-pin in the cross-pin slot such that the cross-pin is received by the rotary locking plate, maintaining the biasing element in the uncompressed state in order to maintain the cross-pin in the fore position of the cross-pin slot, thereby causing the first and second sets of locking teeth to mutually engage, thereby selectively restricting rotation of the rotatable shaft, and applying the sufficient force to compress the biasing element, thereby moving the cross-pin into the aft position of the cross-pin slot, thereby causing the first and second sets of locking teeth to mutually disengage, thereby selectively permitting rotation of the rotatable shaft. The pre-load defines the sufficient force. The first draft angle and the pre-load together define the breakaway torque.

The biasing element in the uncompressed state may bias the rotary locking plate into contact with the stationary locking plate.

The biasing element may be a spring.

The pre-load may be varied or fine-tuned before or during use by disposing one or more shims on the spring or varying the position of the one or more shims on the spring.

The cross-pin in the aft position of the cross-pin slot may move the rotary locking plate out of contact with the stationary locking plate.

The rotary locking plate may be moved out of contact with the rotary locking plate by axial translation.

The cross-pin slot may traverse through the center of the rotary locking plate interfacing shaft section of the rotatable shaft.

The rotary locking plate interfacing shaft section may have a hexagonal profile.

The stationary locking plate interfacing shaft section may be a disc.

The first draft angle may be 85 degrees and the second draft angle may be 85 degrees.

The first draft angle may be 80 degrees and the second draft angle may be 80 degrees.

The cross-pin may be a cylindrical tab, and the cross-pin slot may be a cylindrical slot.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figures 1A-1C are a front perspective view, section view, and exploded perspective view, respectively, of a device for selectively restricting and for preventing rotation of a rotatable shaft, according to an embodiment;
Figures 2A-2B are rear perspective and rear views, respectively, of the locking plate assembly of the device of Figures 1A-1C, in isolation;
Figures 3A-3B are side views of the locking plate assembly of Figures 1A-2B in a disengaged configuration and locked configuration, respectively;
Figure 4 is a front perspective view of the rotatable shaft and bottom half of the stationary locking plate of Figures 1A-1C in isolation;
Figures 5A-5B are cross sectional side perspective views of the device of Figures 1A-1C in a locked configuration and a disengaged configuration, respectively; and
Figure 6 is a flow diagram of a method for selectively restricting and for preventing rotation of a rotatable shaft, according to an embodiment;
Figures 7A-7D show perspective sectional views of a device for selectively restricting and for preventing rotation of a rotatable shaft, according to an embodiment; and
Figure 8 is a sectional view of a tooth of the locking plate assembly of Figures 1A-2B, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to mechanical interfacing, and more particularly to a locking feature in a robotic grappler.

The present disclosure provides a device for selectively restricting and for preventing rotation of a rotatable shaft. The device can act as a secondary or primary locking feature on a rotatable shaft.

This locking feature selectively restricts a shaft from rotating without a positive input at the socket interface. The locking feature further prevents the shaft from rotating when subjected to a torque below the breakaway torque.

The present disclosure may be suitable for or adaptable to any robotic interface with a rotating device and may be applied at least in the fields of planetary exploration, lunar mobility, and certain terrestrial jobs such as manufacturing. The present disclosure may be particularly suitable for or adaptable to endeavours where extended life requirements are present.

For example, an embodiment of the device of the present disclosure may be suitable for significantly more than 40 cycles of rotation with a possible extension to 456 cycles or beyond.

The present disclosure relates to a locking feature and more particularly to a locking feature to be applied to a rotatable shaft. The main components of the locking feature are the locking plates, which include a stationary locking plate attached to a structure and a rotary locking plate attached to the shaft that rotates with the shaft. The stationary locking plate includes teeth disposed at a draft angle relative to the plane of the stationary locking plate. For the purposes of this disclosure, the draft angle is defined as the internal angle between the edge of one tooth and the flat plane defined by the rotary or stationary locking plate to which the tooth is attached. The rotary locking plate includes teeth disposed at the same draft angle. When locked, the plates are engaged and in contact to selectively restrict and to prevent rotation of the shaft relative to the structure. When free to rotate, the plates are disengaged and not in contact and do not selectively restrict or prevent rotation of the shaft relative to the structure. The plates may be engaged by default and disengaged when an input is received, e.g., a positive input from a socket or socket interface. When the input is no longer applied, the plates re-engage, thereby selectively restricting rotation.

The positive input may be received via a depressible plunger disposed in the shaft. The plunger engages a cross-pin disposed in the shaft perpendicularly to the plunger. The cross-pin may be received above and/or below the shaft in or by the rotary locking plate. The positive input depresses the plunger and communicates movement to the cross-pin. Movement of the cross-pin moves the rotary locking plate away from the stationary locking plate, which disengages the rotary locking plate from the stationary locking plate. When the positive input is provided, the shaft is not locked and able to rotate, i.e., rotation is not selectively restricted.

The shaft may be connected, at an end opposite to a socket, socket interface, or generally an end where the positive input is provided, to a robot, robotic device, spacecraft, actuator, end effector, further socket, further socket interface, or other machine (collectively "an apparatus for rotating"). It may be desirable to rotate the apparatus for rotating. It may be desirable, at times, not to rotate the apparatus for rotating. It may be desirable to rotate the apparatus for rotating at some times but not others. Accordingly, where the positive input is provided as described above, the apparatus for rotating may be rotatable (because the shaft connected thereto is rotatable in response to the positive input). Furthermore, where the positive input is not provided as described above, the apparatus for rotating may not be rotatable (because the shaft connected thereto is not rotatable because no positive input is provided to render the shaft rotatable).

The shaft, when rotating, may be considered to rotate relative to the stationary locking plate. The stationary locking plate may include a groove to allow the shaft to rotate only on a single axis, e.g., to rotate along a single rotational axis with no translational motion.

In preferred embodiments, the teeth of the locking plates are not rectangular (i.e., not having draft angles of 90 degrees) but are slightly trapezoidal (i.e., having draft angles between but not including 0 and 90 degrees, e.g., 80 degrees, 85 degrees). Advantageously, when the locking feature is over-torqued (i.e., torque greater than a breakaway torque is applied thereto), shear stress that would otherwise apply to rectangular teeth is reduced or otherwise mitigated by the trapezoidal shape of the teeth as defined by the draft angle, e.g., by the teeth mutually disengaging in a ratcheting fashion. Such ratcheting may include inconsistent movement as the teeth slip past one another, and variable frictional forces may apply as different surfaces of the teeth briefly make contact. Such disengagement or the movement of the teeth may include smooth, non-ratcheting motion where a torque significantly greater than the breakaway torque is applied or where a sufficient torque, which may be lower than the breakaway torque, is maintained.

The present disclosure relates generally to selectively restricting and to preventing undesirable rotation of a second robotic part relative to a first robotic part, particularly after grappling or capture of the second robotic part by the first robotic part.

In an embodiment, the device for selectively restricting and for preventing rotation of a rotatable shaft selectively restricts a shaft from rotating without a positive input provided at a sufficient force at the socket interface and further prevents the rotatable shaft from rotating at a torque less than a breakaway torque. The device limits the number of wear surfaces and provides a positive locking feature through adjustably providing for a minimum force before rotation is selectively permitted and for a breakaway torque such that, at torques lower than the breakaway torque, rotation is prevented. The device is a locking feature that selectively restricts a shaft from rotating without a positive input at the socket interface. The socket interface presses down on a plunger running through the center of a projection of the device that disengages two locking plates, thereby selectively permitting the projection to rotate. When the positive input at the socket interface is removed, a biasing element (e.g., a spring) re-engages the locking plates, selectively restricting rotation. The spring is subjected to a pre-load that may be varied or fine-tuned before or during use. For example, a number of shims may be disposed on an end of the spring to generate a selected pre-load. The number of shims (or distance of one or more of the shims from the end of the spring connected to the depressible plunger) may be varied in order to increase or decrease the pre-load. In addition to or instead of disposing the shims on the end of the spring, the spring or other biasing element may further be selected based on its spring force. In an embodiment, the biasing element is configured, designed, or selected to have the appropriate pre-load. It will be appreciated that the pre-load may be varied or fine-tuned before or during use in ways other than the shims.

The foregoing device solves the problem of limiting the number of wear surfaces and providing a positive locking feature on a small orbital replaceable unit ("ORU") robotics interface ("SORI") that can withstand a higher number of cycles than conventional anti-rotation, selective rotation, selective restriction of rotation, and prevention of rotation features. In particular, avoiding the use of split beam, polymer insert, or lock nuts allows for greater reusability and a significantly greater number of cycles to increase the life of the device.

Moreover, performing one or more of selecting or varying the draft angle of the teeth and selecting or varying the pre-load of the biasing element may advantageously enable selecting or varying a breakaway torque to be applied to the device (or a component connected to the device and configured for rotation) to and to prevent rotation when a torque below the breakaway torque is applied thereto. Selecting or varying the pre-load of the biasing element may further advantageously enable selecting or varying a sufficient force to be applied to the device (or a component connected to the device and configured for selective rotation) to selectively permit rotation. Varying one or more of the draft angle (e.g., by altering the stationary plate or selecting a different stationary plate that has a different draft angle) or the pre-load (e.g., by adding or moving shims on the spring in a test setup, or by varying the configuration or composition of the spring in an implementation) varies the breakaway torque. Advantageously, despite passive intermodulation (PIM), vibrational forces, and other environmental forces that may otherwise serve to rotate the device, the component attached thereto, or other components of a broader device, apparatus, system, or spacecraft, the use of one or more of the draft angle and the pre-load to select a breakaway torque for rotation may enable preventing (and, above the breakaway torque, no longer preventing) rotation according to the draft angle and/or the pre-load selected. Similarly, the use of the pre-load to select a sufficient force to be applied to selectively permit rotation may enable selectively restricting rotation according to the pre-load selected.

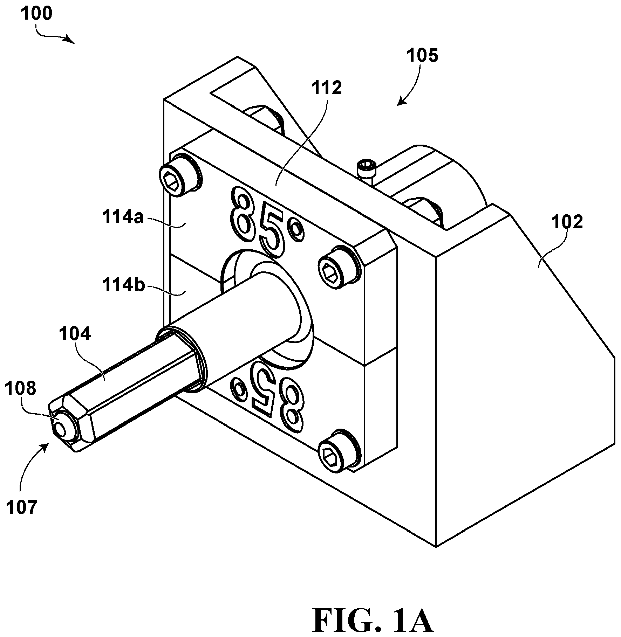

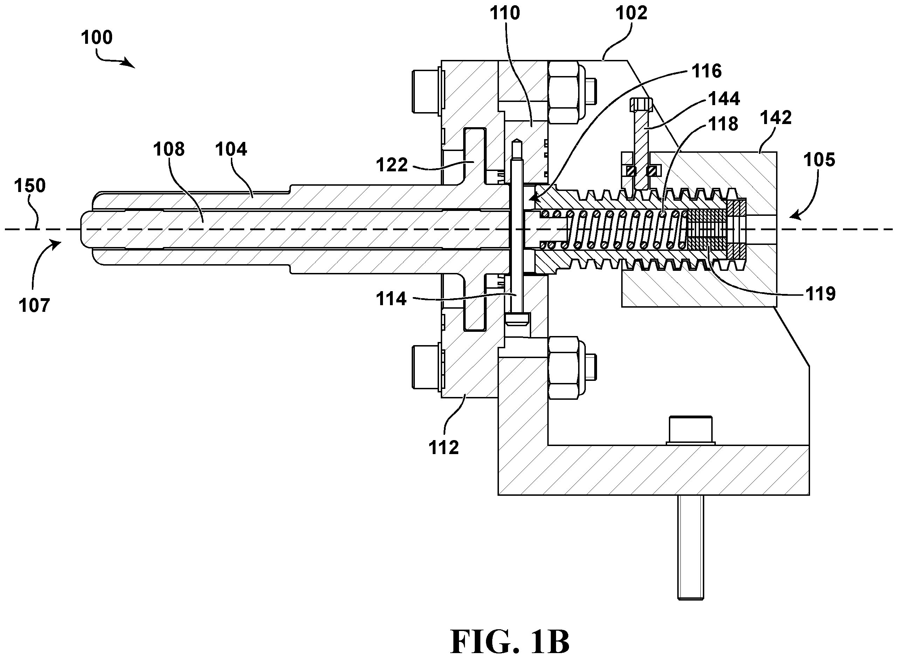

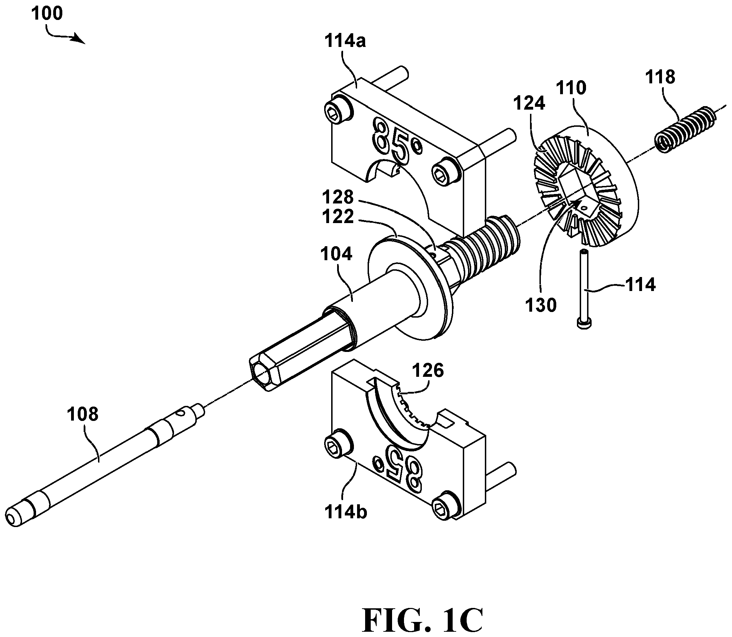

Referring now to Figures 1A-1C, shown therein are a front perspective view, section view, and exploded perspective view, respectively, of a device 100 for selectively restricting and for preventing rotation of a rotatable shaft 104, according to an embodiment.

The device 100 includes a housing 102 for maintaining components of the device 100 in their respective positions during use.

The device 100 further includes the rotatable shaft 104 for engaging with an attached component (not shown) to selectively permit rotation relative to the device 100. The attached component may be the apparatus for rotating as described herein. The rotatable shaft 104 is configured to rotate about an axis of rotation 150 relative to the device 100.

In an embodiment, the rotatable shaft 104 is a tie-down bolt, e.g., a tie-down bolt suitable for space flight mission and/or for interfacing with spacecraft, end effectors of spacecraft, etc.

The rotatable shaft 104 includes a first or proximal end 105 and a second or distal end 107 with respect to the device 100. The rotatable shaft 104 may interface with the attached component at the proximal end 105. The rotatable shaft 104 at the distal end 107 may be hexagonal in shape. The rotatable shaft 104 at the distal end 107 may be or take any shape suitable for interfacing with a socket or a socket interface (not shown).

The rotatable shaft 104 includes a plunger 108. The plunger 108 receives a positive input at the distal end 107 to selectively permit rotation thereof relative to the device 100. The plunger 108 may be a push rod.

The plunger 108 may be configured to receive a torquer (not shown). The torquer interfaces with the rotatable shaft 104 to provide torque. In order to cause the device 100 to selectively permit the torquer to provide the torque, the torquer provides a positive input at the distal end 107 of the plunger 108 (e.g., by depressing the plunger 108).

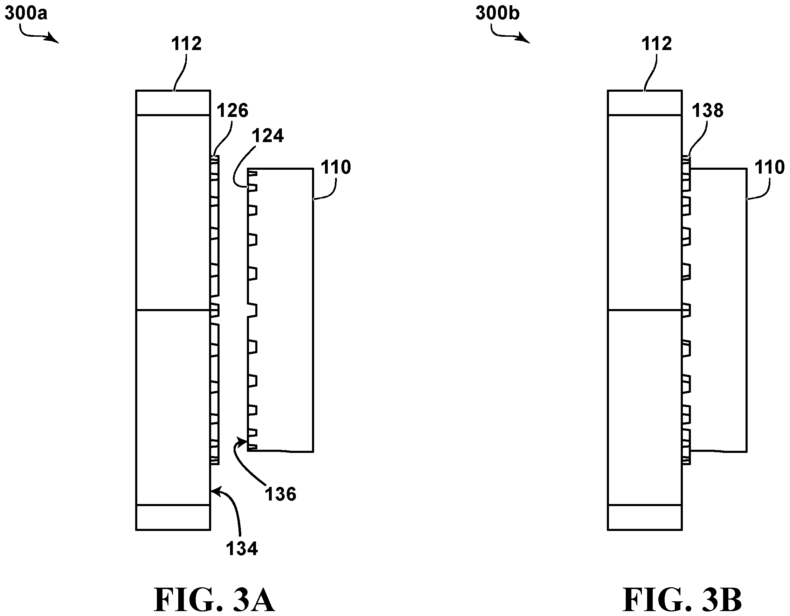

The device 100 further includes a rotary locking plate 110. The rotary locking plate 110 may be disposed adjacent the housing 102. The rotary locking plate 110 includes rotary locking plate teeth 124. The rotary locking plate 110 further includes an aperture 130 (also referred to as RLP aperture) for receiving the rotatable shaft 104 therethrough. The rotary locking plate 110, in a disengaged configuration (see Figure 3A) rotates with the rotatable shaft 104.

The device 100 further includes a stationary locking plate 112. The stationary locking plate 112 is disposed adjacent the rotary locking plate 110 (towards distal end 107). The stationary locking plate 112 includes stationary locking plate teeth 126. The stationary locking plate 112 remains static or stationary while the rotatable shaft 104 rotates. The stationary locking plate teeth 126 are disposed on the stationary locking plate 112 at a first draft angle. The rotary locking plate teeth 124 are disposed on the stationary locking plate at a second draft angle. In a preferred embodiment, the first and second draft angles are substantially identical. In an embodiment, the draft angle may be 85 degrees. In another embodiment, the draft angle may be 80 degrees. These draft angles are merely examples of possible draft angles that may be used. In other embodiments, other draft angles may be used provided that the stationary locking plate teeth 126 and the rotary locking plate teeth 124 are able to sufficiently mesh or mutually engage. The draft angles of the teeth 124, 126 correspond to the breakaway torque, with draft angles closer to 90 degrees being associated with a higher breakaway torque than lower draft angles.

In an embodiment, the stationary locking plate teeth 126 and/or the rotary locking plate teeth 124 are configured on the stationary locking plate 112 and/or the rotary locking plate 110, respectively, such that the first draft angle and the second draft angle, respectively, may not be changed or varied during use.

In an embodiment, the stationary locking plate teeth 126 and/or the rotary locking plate teeth 124 are configured on the stationary locking plate 112 and/or the rotary locking plate 110, respectively, such that the first draft angle and the second draft angle, respectively, may be changed, varied, or tuned before use.

When the rotary locking plate 110 and the stationary locking plate 112 are mutually engaged, the rotary locking plate teeth 124 and the stationary locking plate teeth 126 interlock such that rotation of the rotary locking plate 110 relative to the stationary locking plate 112 is selectively restricted, limited, or impeded. In an embodiment where the draft angle is 90 degrees, such rotation may be impossible.

Numerous stationary locking plate teeth 126 and rotary locking plate teeth 124 may be suitable for use in the device 100 as herein described, provided that the stationary locking plate teeth 126 and the rotary locking plate teeth 124 are configured to engage and disengage and are disposed at the first draft angle and the second draft angle, respectively, as herein described. Such stationary locking plate teeth 126 and rotary locking plate teeth 124 may complementarily vary in number, angle, and shape of the teeth provided that the foregoing conditions obtain.

The rotary locking plate 110 receives a cross-pin 114 at a cross-pin slot. Because the cross-pin 114 is received at and is in physical contact with the rotary locking plate 110, movement of the cross-pin 114 (i.e., between the fore position and the aft position) causes movement of the rotary locking plate (i.e., towards and away from the stationary locking plate 112) via actuation of the plunger 108.

The cross-pin 114 passes through and engages with the plunger 108 to allow the rotary locking plate 110 to be disengaged from the stationary locking plate 112.

When the rotary locking plate 110 and the stationary locking plate 112 engage one another, rotation of the rotatable shaft 104 (and of any attached component) is selectively restricted, limited, or impeded.

When the rotary locking plate 110 and the stationary locking plate 112 are not mutually engaged (e.g., after the rotary locking plate 110 and the stationary locking plate 112 have disengaged from one another), rotation of the rotatable shaft 104 (and of any attached component) is possible, i.e., selectively permitted.

The stationary locking plate 112 includes a top half 114a and a bottom half 114b together forming the stationary locking plate 112.

The teeth 124, 126 of the locking plates 110, 112 are not rectangular (i.e., not having draft angles of 90 degrees) but are slightly trapezoidal (i.e., having draft angles between but not including 0 and 90 degrees, e.g., 80 degrees, 85 degrees). Advantageously, when the device 100 is over-torqued (i.e., torque greater than a breakaway torque is applied thereto), shear stress that would otherwise apply to rectangular teeth is reduced or otherwise mitigated by the trapezoidal shape of the teeth 124, 126 as defined by the draft angle, e.g., by the teeth 124, 126 mutually disengaging in a ratcheting fashion. Such ratcheting may include inconsistent movement as the teeth 124, 126 slip past one another, and variable frictional forces may apply as different surfaces of the teeth 124, 126 briefly make contact. Such disengagement or the movement of the teeth 124, 126 may include smooth, non-ratcheting motion where a torque significantly greater than the breakaway torque is applied. Once disengagement has occurred, a lower maintained torque may allow for continued non-ratcheting rotation.

The rotatable shaft 104 includes a stationary locking plate (SLP) interfacing shaft section 122 for interfacing with both the top half 114a and the bottom half 114b in order that the rotatable shaft 104 is disposed therebetween in the stationary locking plate 112.

The rotatable shaft 104 includes a rotary locking plate (RLP) interfacing shaft section 128 for interfacing with the rotary locking plate 110 via the RLP aperture 130. The profile or shape of the RLP interfacing shaft section 128 is complementary to the profile or shape of the RLP aperture 130 such that the RLP interfacing shaft section 128 engages the RLP aperture 130 and reacts to rotary locking plate moments.

The cross-pin 114 for engaging the plunger 108 is disposed in the cross-pin slot 116 in the rotatable shaft 104. The cross-pin 114 is disposed perpendicularly to the rotatable shaft 104. The cross-pin 114 is received above and below the rotatable shaft 104 in or by the rotary locking plate 110. The cross-pin 114 is disposed perpendicular to the axis of rotation 150.

The rotary locking 110 plate slides onto the RLP interfacing shaft section 128 so that the cross-pin 114 is screwed in passing through the shaft 104 via the cross-pin slot 116.

The device 100 further includes a biasing element 118. The biasing element 118 may be a spring 118. The spring 118 compresses and stores potential energy transmitted by the plunger 108 upon the plunger 108 receiving the positive input at the distal end 107 and being depressed towards the proximal end 105. In an embodiment, the spring 118 is made of stainless steel to resist corrosion. Other springs may be suitable as the spring 118 provided that such springs are able to provide a restorative force.

When the plunger 108 no longer receives the positive input at the distal end 107, the spring 118 extends, releasing the potential energy, which moves the plunger 108 back towards the distal end 107.

The device 100 further includes a plurality of shims 119 disposed about the spring 118. The spring 118 is subjected to a pre-load that may be varied or fine-tuned before or during use. For example, the number of shims 119 disposed on the spring 118 or the exact position of the shims 119 on the spring 118 may be calculated and subsequently changed or varied in order to generate a selected pre-load. It will be appreciated that the pre-load may be varied or fine-tuned before or during use in ways other than the shims 119.

The pre-load may be adjusted in ways other than providing the plurality of shims 119. The biasing element 118 provides a retuming force and is tuned so that a desired returning force is provided at the draft angle.

The pre-load (and adjustments thereto) and the draft angle are configurable to tune or calibrate a precise breakaway torque beyond which the teeth 124, 126 mutually disengage (i.e., if a torque greater than the breakaway torque is applied to the device 100). The device 100 prevents rotation when a torque below the breakaway torque is applied thereto.

The device 100 may further include an adjustment cover 142 for calibrating the device 100 by controlling or tuning the biasing element 118 via the shims 119.

The device 100 may further include a retaining screw 144 for holding in place the adjustment cover 142 when calibrated.

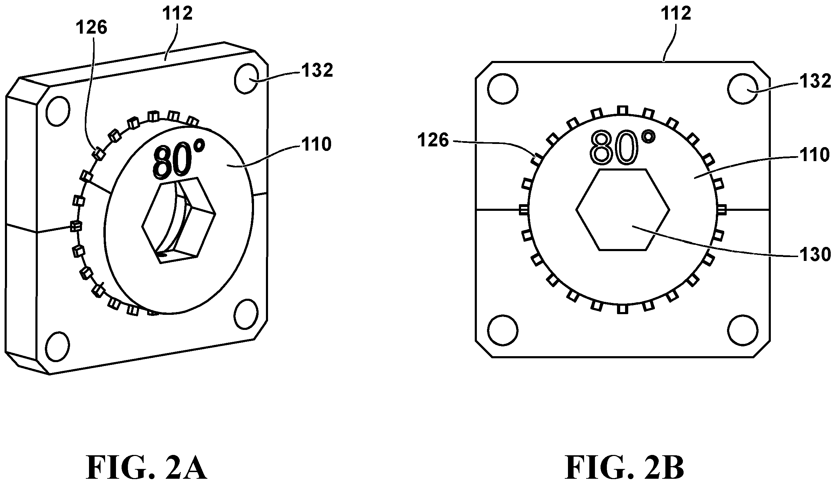

Referring now to Figures 2A-2B, shown therein are rear perspective and rear views, respectively, of the locking plate assembly of the device of Figures 1A-1C, in isolation.

The stationary locking plate 112 is shown in opaque orange. The rotary locking plate 110 is shown in transparent brown. Because of the angle of Figures 2A and 2B, the rotary locking plate teeth 124 are not visible but are present.

In Figure 2A, the interconnection of the stationary locking plate 112 and the rotary locking plate 110 is visible, as the radially arranged stationary locking plate teeth 126 and the rotary locking plate teeth 124 are interlocked. In Figures 2A and 2B, rotation of the rotary locking plate 110 relative to the stationary locking plate 112 is selectively restricted.

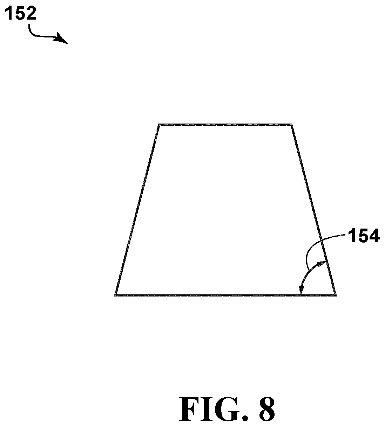

Referring now to Figure 8, shown therein is a sectional view of a tooth 152 with a draft angle labelled as 154. The tooth 152 may be one of the rotary locking plate teeth 124 or the stationary locking plate teeth 126. The tooth 152 is configured to mesh (i.e., to engage and disengage) with other like teeth 152.

In Figures 2A and 2B, the first and second draft angles (i.e., the angle at which the stationary locking plate teeth 126 are disposed on the stationary locking plate 112 and angled relative to the plane of the stationary locking plate 112 and the angle at which the rotary locking plate teeth 124 are disposed on the rotary locking plate 110 and angled relative to the plane of the rotary locking plate 110) is 80 degrees. Because the first and second draft angles are 80 degrees, it will be appreciated that the stationary locking plate teeth 126 as shown in Figure 2A are angled slightly away from the viewer.

In a different embodiment, the first draft angle and the second draft angle are 85 degrees.

A variety of draft angles may be suitable for the device 100, provided that any such draft angle allows for selecting a breakaway torque to be applied to the device 100 (or a component connected to the device 100 and configured for selective rotation) below which torque to prevent rotation.

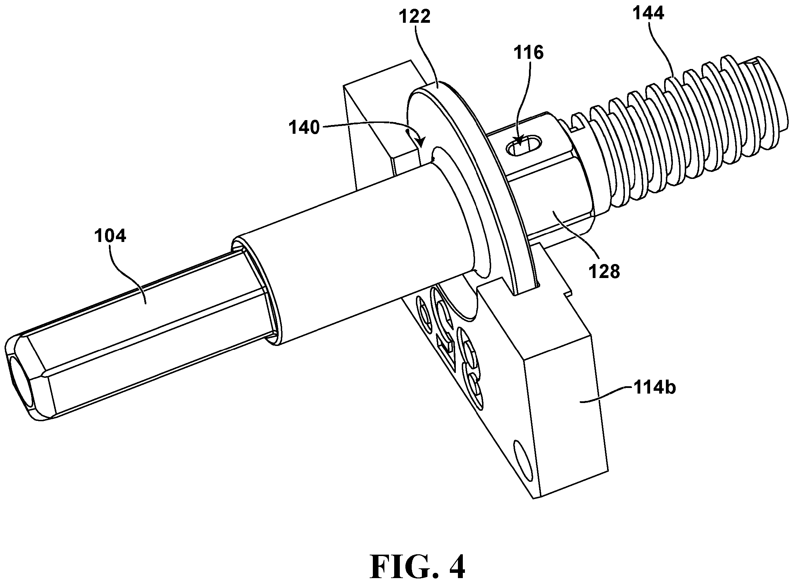

The RLP aperture 130 is configured to receive a complementarily shaped RLP interfacing shaft section 128 (see Figure 4). In an embodiment, the RLP interfacing shaft section 128 has a hexagonal profile and the RLP aperture 130 is hexagonal in shape.

The stationary locking plate 112 further includes holes 132 for fastening the stationary locking plate 112 to the housing 102. When the stationary locking plate 112 is fastened to the housing 102 via the holes 132, the stationary locking plate 112 is stationary relative to the housing 102, i.e., does not move translationally or rotationally relative to the housing 102.

Referring now to Figures 3A-3B, shown therein are side views of the stationary locking plate 112 and the rotary locking plate 110 of Figures 1A-2B in a disengaged configuration 300a and in a locked configuration 300b, respectively. Identical references denote identical features with respect to Figures 1A-2B.

The stationary locking plate 112 includes a rotary locking plate interfacing side 134 for interfacing with a stationary locking plate interfacing side 136 of the rotary locking plate 110.

In the locked configuration 300b, the interfacing sides 134 and 136 interface or interconnect. The interfacing sides 134, 136 are brought physically close enough together for their respective teeth to engage. In the locked configuration 300b, the rotary locking plate teeth 124 and the stationary locking plate teeth 126 interlock to form interlocked teeth 138 such that rotation of the rotary locking plate 110 relative to the stationary locking plate 112 is no longer possible, i.e., is selectively prevented.

Referring now to Figure 4, shown therein is a front perspective view of the rotatable shaft 104 and bottom half 114b of the stationary locking plate 112 of Figures 1A-1C, in isolation.

The bottom half 114b includes a groove 140 for receiving the rotatable shaft 104. The top half 114a includes a corresponding groove (not shown) for receiving the rotatable shaft 104.

The SLP interfacing shaft section 122 includes a projection adapted to complementarily fit in the grooves 140. In an embodiment, the projection forms a circular shape about the rotatable shaft 104. For example, the SLP interfacing section 122 may be disc-shaped. In other embodiments, the SLP interfacing shaft section 122 may be any shape or have any profile that allows the SLP interfacing shaft section 122 (and thus the rotatable shaft 104) to rotate relative to the stationary locking plate 114.

In Figure 4, the cross-pin slot 116 for receiving the cross-pin 114 is visible. The cross-pin slot 116 is disposed in the RLP interfacing shaft section 128 of the rotatable shaft 104.

The RLP interfacing shaft section 128 has a complementary shape or profile to the RLP aperture 130 and is suitable for interfacing therewith. In an embodiment, the RLP interfacing shaft section 128 has a hexagonal profile.

In an embodiment, the RLP interfacing shaft section 128 and the RLP aperture 130 have square or triangular shapes or profiles, respectively. The RLP interfacing shaft section 128 and the RLP aperture 130 may have any complementary shapes or profiles suitable for transferring rotation.

The rotatable shaft 104 further includes a threaded segment 144 for interfacing with the attached component (not shown). Other connections or couplers may be provided instead of the threaded segment 144 (e.g., a solid connection, a shaft coupler).

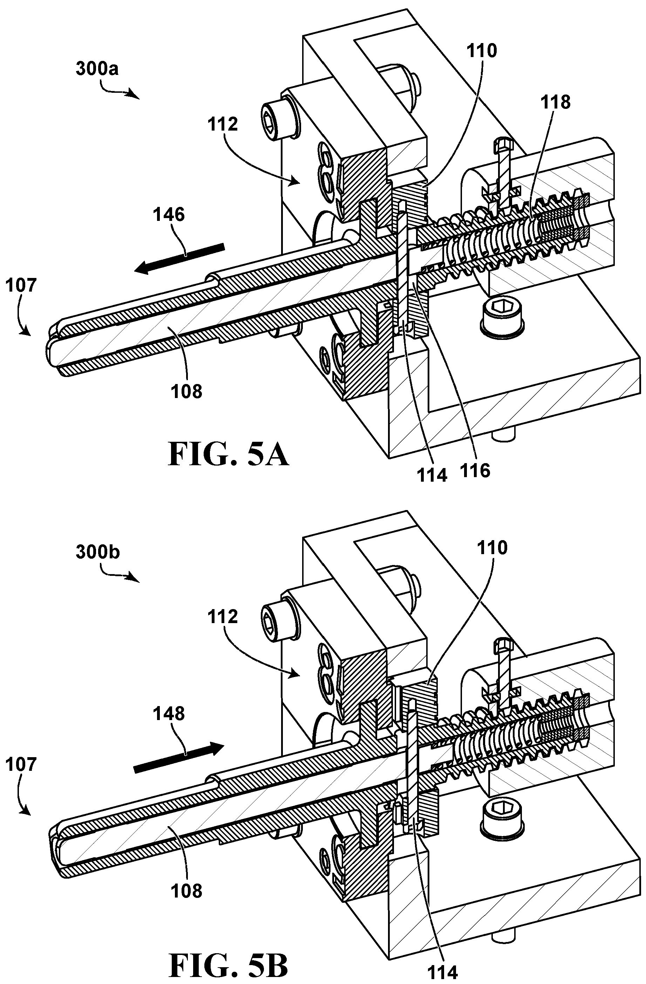

Referring now to Figures 5A-5B, shown therein are cross-sectional side perspective views of the device 100 in the locked configuration 300b and the disengaged configuration 300a, respectively. Simultaneous reference will also be made to Figures 1A-4, as not all features are numbered and/or visible in Figures 5A-5B.

In the locked configuration 300b, a positive input has not been received at the distal end 107 of the plunger 108. The plunger 108 is not depressed. The spring 118 is extended (uncompressed state) and retains the cross-pin 116 in the fore position of the cross-pin slot 116. The force applied to the cross-pin 114 by the spring 118 pushing the cross-pin 114 into the fore position causes the rotary locking plate 110 to move in direction 146 and into physical contact with the stationary locking plate 112. In doing so, the rotary locking plate 110 and the stationary locking plate 112 have interlocked such that the rotary locking plate teeth 124 and the stationary locking plate teeth 126 have formed the interlocked teeth 138. The formation of the interlocked teeth 138 selectively restricts movement of the rotary locking plate 110 relative to the stationary locking plate 112, particularly selectively restricting rotation. As rotation of the shaft 104 is tied to the rotary locking plate 110 through their mutual engagement (via RLP interfacing shaft section 128), the rotatable shaft 104 is also selectively restricted from rotating.

In the unlocked or disengaged configuration 300a, there is a positive input at the distal end 107 of the plunger 108. The positive input depresses the plunger 108 in direction 148. The force applied to depress plunger 108 is sufficient to compress the spring 118, which means the spring 118 no longer selectively restricts the cross-pin 114 from moving into the aft position of the cross-pin slot 116. Movement of the cross-pin 114 into the aft position of the cross-pin slot 116 transfers movement to the rotary locking plate 110 to which the cross-pin 114 is connected (through a cross-pin hole). Thus, the movement of the cross-pin 114 in direction 148 causes the rotary locking plate 110 to also move in direction 148. The movement of rotary locking plate 110 is sufficient to bring the rotary locking plate 110 out of physical contact with the stationary locking plate 112. In doing so, the locking teeth 124, 126 are disengaged (no longer interlocked, preventing rotation). As such, the rotation of the rotary locking plate 110 is no longer selectively restricted, which selectively permits the rotatable shaft 104 to rotate.

Upon removal of the positive input at the distal end 107, the spring 118 extends, effecting the sequence that puts the device for selectively restricting and for preventing rotation of a rotatable shaft into the locked configuration 300b.

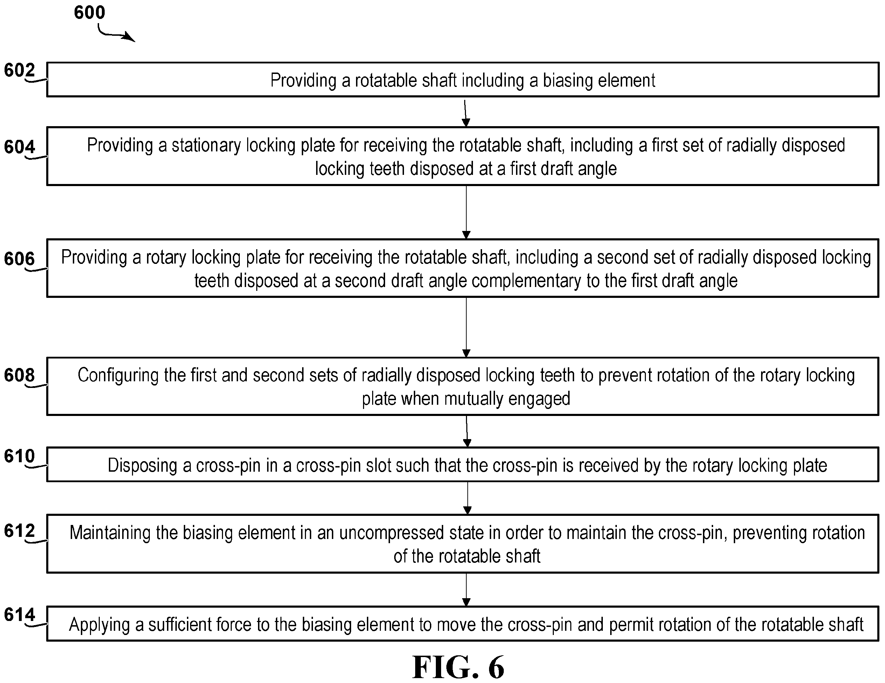

Referring now to Figure 6, shown therein is a flow diagram of a method 600 for selectively restricting and for preventing rotation of a rotatable shaft, according to an embodiment. The rotatable shaft may be the rotatable shaft 104 of Figures 1A-5B. The method 600 may be applied to or using the device 100 of Figures 1A-5B for selectively restricting and for preventing rotation of a rotatable shaft.

At 602, the method 600 includes providing the rotatable shaft, the rotatable shaft including a stationary locking plate interfacing shaft section, a rotary locking plate interfacing shaft section, a cross-pin slot including a fore position and an aft position, and a biasing element having an uncompressed state and a compressed state, the biasing element subject to a pre-load. The biasing element may be the biasing element 118 of the device 100. The biasing element 118 may be a spring.

At 604, the method 600 includes providing a stationary locking plate for receiving the stationary locking plate interfacing shaft section, the stationary locking plate including a first set of radially disposed locking teeth facing a rotary locking plate, the first set of radially disposed locking teeth disposed at a first draft angle.

At 606, the method 600 includes providing a rotary locking plate for receiving the rotary locking plate interfacing shaft section, the rotary locking plate including a second set of radially disposed locking teeth facing the stationary locking plate, the second set of radially disposed locking teeth disposed at a second draft angle, the rotary locking plate further for receiving a cross-pin. In a preferred embodiment, the first draft angle and the second draft angle are substantially identical, e.g., both 80 degrees, both 85 degrees.

At 608, the method 600 includes configuring the first and second sets of radially disposed locking teeth to selectively restrict rotation of the rotary locking plate when mutually engaged.

At 610, the method 600 includes disposing the cross-pin in the cross-pin slot such that the cross-pin is received by the rotary locking plate.

At 612, the method 600 includes maintaining the biasing element in the uncompressed state in order to maintain the cross-pin in the fore position of the cross-pin slot, thereby causing the first and second sets of locking teeth to mutually engage, thereby selectively restricting rotation of the rotatable shaft.

At 614, the method 600 includes applying a sufficient force to compress the biasing element, thereby moving the cross-pin into the aft position of the cross-pin slot, thereby causing the first and second sets of locking teeth to mutually disengage, thereby selectively permitting rotation of the rotatable shaft.

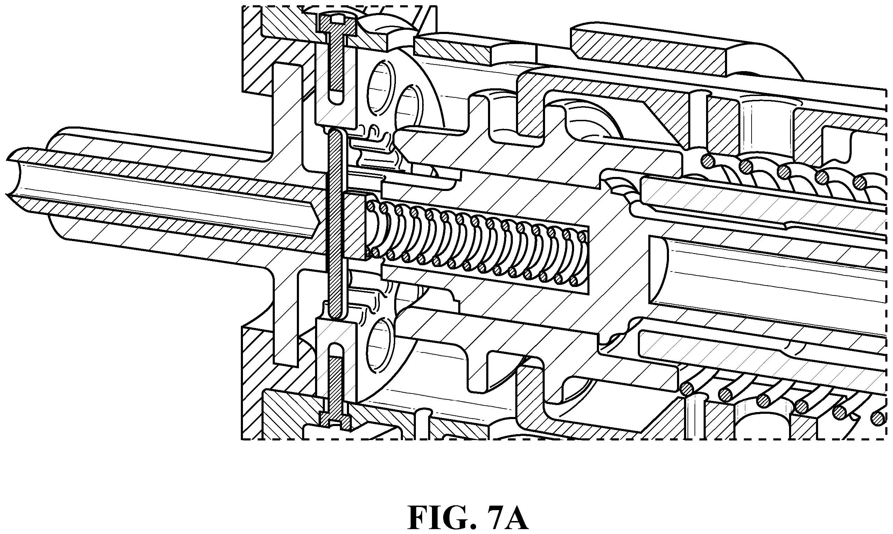

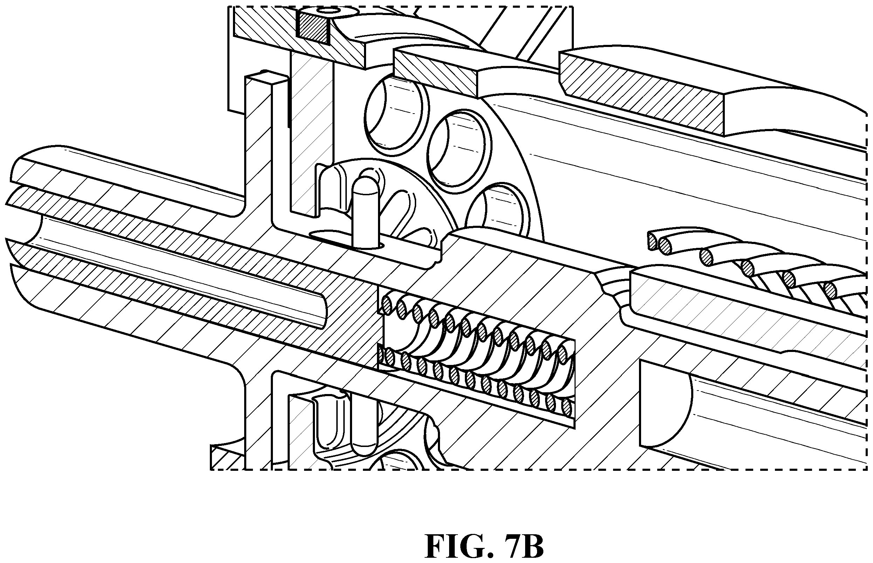

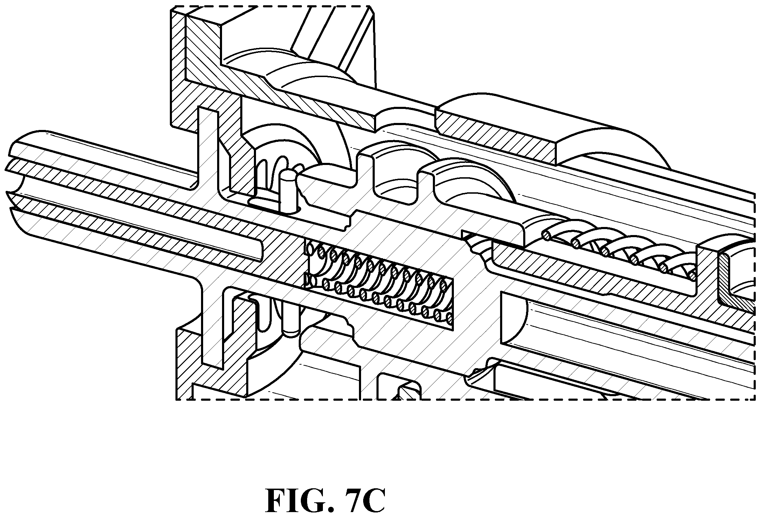

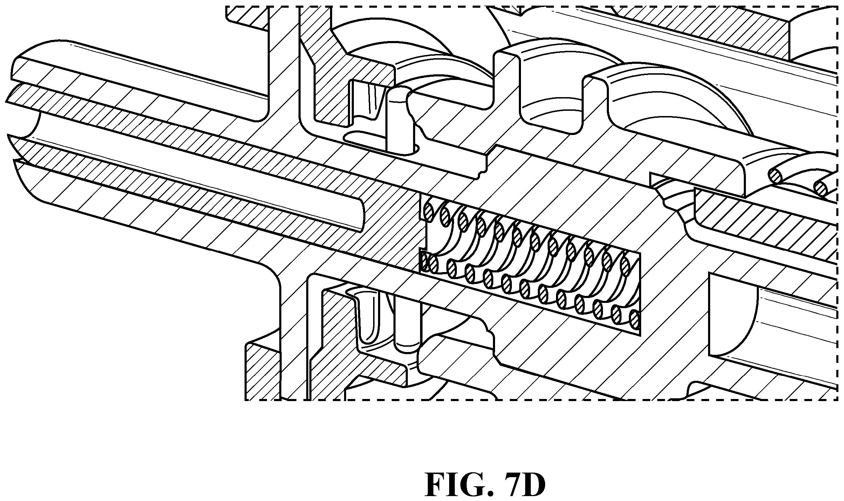

Referring now to Figures 7A-7D, shown therein are perspective sectional views of a device for selectively restricting and for preventing rotation of a rotatable shaft, according to an embodiment. The embodiment shown in Figures 7A-7D is different to the embodiment shown in Figures 1A-1C.

While the particular embodiment of stationary and rotary locking plates as shown in Figures 1A-1C is mainly discussed in this disclosure, the inventors additionally envision embodiments using a cylindrical tab and slot as shown in Figures 7A-7D.

While the above description provides examples of one or more apparatus, methods, or systems, it may be appreciated that other apparatus, methods, or systems may be within the scope of the claims as interpreted by one of skill in the art.

What is claimed is the systems, methods, and devices as generally and specifically described herein.

## Claims

1. A device for selectively restricting and for preventing rotation of a rotatable shaft, the device comprising:
a rotatable shaft for receiving a torque input, comprising:
a stationary locking plate interfacing shaft section and a rotary locking plate interfacing shaft section;
a plunger disposed within and along an axis of rotation of the rotatable shaft, the plunger having a first end and a second end longitudinally opposed along the axis of rotation;
a biasing element disposed within and along the axis of rotation, abutting the second end of the plunger, the biasing element having an uncompressed state and a compressed state, the biasing element subjected to a pre-load; and
a cross-pin slot disposed in the rotary locking plate interfacing shaft section of the rotatable shaft, the cross-pin slot having a fore position and aft position, the fore position being closer to the first end of the plunger than the aft position;
a locking plate assembly comprising:
a stationary locking plate including:
a groove perpendicular to the axis of rotation for receiving the stationary locking plate interfacing shaft section to allow rotation of the rotatable shaft relative to the stationary locking plate;
a first set of radially disposed locking teeth on a rotary locking plate interfacing side of the stationary locking plate, the first set of radially disposed locking teeth disposed at a first draft angle;
a rotary locking plate including:
an aperture therethrough that is perpendicular to the axis of rotation and configured to receive and engage with the rotary locking plate interfacing shaft section such that the rotary locking plate rotates with the rotatable shaft when the rotatable shaft is in the aperture;
a cross-pin hole;
a second set of radially disposed locking teeth on a stationary locking plate interfacing side of the rotary locking plate, the second set of radially disposed locking teeth disposed at a second draft angle substantially identical to the first draft angle;
the first and second sets of radially disposed locking teeth i) being configured to selectively restrict rotation of the rotary locking plate when mutually engaged when a force applied to the first end of the plunger is below a sufficient force and ii) being configured to prevent rotation of the rotary locking plate when mutually engaged when a torque applied to the rotatable shaft is below a breakaway torque;
a cross-pin disposed in the cross-pin slot and through the plunger perpendicular to the axis of rotation such that the cross-pin is received in the cross-pin hole of the rotary locking plate;
wherein, when the biasing element is uncompressed, the biasing element maintains the cross-pin in the fore position of the cross-pin slot, thereby causing the first and second sets of locking teeth to mutually engage, thereby selectively restricting rotation of the rotatable shaft;
wherein, when the sufficient force is applied to the first end of the plunger, the second end of the plunger compresses the biasing element, moving the cross-pin into the aft position of the cross-pin slot causing the rotary locking plate to translate axially along the axis of rotation away from the stationary locking plate, thereby causing the first and second sets of locking teeth to mutually disengage, thereby selectively permitting rotation of the rotatable shaft;
wherein the pre-load defines the sufficient force;
wherein the first draft angle and the pre-load together define the breakaway torque.

2. The device of claim 1, wherein the biasing element in the uncompressed state biases the rotary locking plate into contact with the stationary locking plate, wherein the biasing element is a spring, and wherein the pre-load is varied or fine-tuned before or during use by disposing one or more shims on the spring or varying the position of the one or more shims on the spring.

3. The device of any one of claims 1 to 2, wherein the cross-pin moving from the fore position to the aft position moves the rotary locking plate out of contact with the stationary locking plate.

4. The device of any one of claims 1 to 3, wherein the cross-pin slot is perpendicular to the axis of rotation and traverses the center of the rotary locking plate interfacing shaft section of the rotatable shaft, and wherein the rotary locking plate interfacing shaft section has a hexagonal profile and the aperture of the rotary locking plate has a complementary hexagonal profile.

5. The device of any one of claims 1 to 4, wherein the stationary locking plate interfacing shaft section is disc-shaped.

6. The device any one of claims 1 to 5, wherein the first draft angle is 85 degrees and the second draft angle is 85 degrees.

7. The device of any one of claims 1 to 5, wherein the first draft angle is 80 degrees and the second draft angle is 80 degrees.

8. The device of claim 1, wherein the cross-pin is a cylindrical tab, wherein the cross-pin hole is a cylindrical hole, and wherein the cross-pin slot is a cylindrical slot.

9. A method for selectively preventing and permitting rotation of a rotatable shaft, the method comprising:
providing the rotatable shaft comprising a stationary locking plate interfacing shaft section, a rotary locking plate interfacing shaft section, a cross-pin slot comprising a fore position and an aft position, a plunger disposed within and along an axis of rotation of the rotatable shaft, the plunger having a first end and a second end longitudinally opposed along the axis of rotation, and a biasing element having an uncompressed state and a compressed state, the biasing element subject to a pre-load;
providing a stationary locking plate for receiving the stationary locking plate interfacing shaft section, the stationary locking plate comprising a first set of radially disposed locking teeth facing a rotary locking plate, the first set of radially disposed locking teeth disposed at a first draft angle;
providing the rotary locking plate for receiving the rotary locking plate interfacing shaft section, the rotary locking plate comprising a second set of radially disposed locking teeth facing the stationary locking plate, the second set of radially disposed locking teeth disposed at a second draft angle substantially identical to the first draft angle, the rotary locking plate further for receiving a cross-pin;
configuring the first and second sets of radially disposed locking teeth to i) selectively restrict rotation of the rotary locking plate when mutually engaged when a force applied to the first end of the plunger is below a sufficient force and ii) prevent rotation of the rotary locking plate when mutually engaged when a torque applied to the rotatable shaft is below a breakaway torque;
disposing the cross-pin in the cross-pin slot such that the cross-pin is received by the rotary locking plate;
maintaining the biasing element in the uncompressed state in order to maintain the cross-pin in the fore position of the cross-pin slot, thereby causing the first and second sets of locking teeth to mutually engage, thereby selectively restricting rotation of the rotatable shaft; and
applying the sufficient force to compress the biasing element, thereby moving the cross-pin into the aft position of the cross-pin slot, thereby causing the first and second sets of locking teeth to mutually disengage, thereby selectively permitting rotation of the rotatable shaft;
wherein the pre-load defines the sufficient force;
wherein the first draft angle and the pre-load together define the breakaway torque.

10. The method of claim 9, wherein the biasing element in the uncompressed state biases the rotary locking plate into contact with the stationary locking plate, wherein the biasing element is a spring, and wherein the pre-load is varied or fine-tuned before or during use by disposing one or more shims on the spring or varying the position of the one or more shims on the spring.

11. The method of any one of claims 9 to 10, wherein the cross-pin in the aft position of the cross-pin slot moves the rotary locking plate out of contact with the stationary locking plate.

12. The method of any one of claims 9 to 11, wherein the rotary locking plate is moved out of contact with the rotary locking plate by axial translation.

13. The method of any one of claims 9 to 12, wherein the cross-pin slot traverses through the center of the rotary locking plate interfacing shaft section of the rotatable shaft.

14. The method of any one of claims 9 to 13, wherein the rotary locking plate interfacing shaft section has a hexagonal profile, and wherein the stationary locking plate interfacing shaft section is a disc.

15. The method of any one of claims 9 to 14, wherein the first draft angle is 85 degrees and the second draft angle is 85 degrees, or wherein the first draft angle is 80 degrees and the second draft angle is 80 degrees.
